# EUROPÄISCHE PATENTSCHRIFT

(11) **EP 2 934 948 B1**
(45) Veröffentlichungstag und Bekanntmachung des Hinweises auf die Patenterteilung: **11.01.2017**
(21) Anmeldenummer: 13798255.9
(22) Anmeldetag: 28.11.2013
(51) Int. Cl.: B60R 7/04

(54) **AUFNAHME FÜR EIN ZUMINDEST IM WESENTLICHEN QUADERFÖRMIGES BEHÄLTNIS IN EINEM INNENRAUM EINES KRAFTFAHRZEUGS**
RECEPTACLE FOR AN AT LEAST SUBSTANTIALLY CUBOID-SHAPED CONTAINER IN AN INTERIOR OF A MOTOR VEHICLE
LOGEMENT POUR CONTENANT AU MOINS SENSIBLEMENT PARALLÉLÉPIPÉDIQUE DANS UN HABITACLE D'UN VÉHICULE AUTOMOBILE

(30) Priorität: 20.12.2012 GB 201223138
(43) Veröffentlichungstag der Anmeldung: 28.10.2015
(73) Patentinhaber: Daimler AG, 70327 Stuttgart (DE)
(72) Erfinder: DONY, George, 411015 Pune (IN); HONNAPPANAVAR, Chandrappa, 582103 Gadag (IN); KLOTH, Katharina, 71067 Sindelfingen (DE); THOMBARE, Vivek, 411057 Pune (IN); WAGH, Abhijeet, 411057 Pune (IN)
(74) Vertreter: JENSEN & SON
(86) Internationale Anmeldenummer: PCT/EP2013/003608
(87) Internationale Veröffentlichungsnummer: WO 2014/094969

(56) Entgegenhaltungen:
- GB-A- 203 418

## Beschreibung

Die Erfindung betrifft eine Aufnahme für ein zumindest im Wesentlichen quaderförmiges Behältnis in einem Innenraum eines Kraftfahrzeugs, welches wenigstens vier Wandelemente umfasst, welche jeweilige Anlageflächen für das quaderförmige Behältnis bilden, wobei jeweils zwei der Anlageflächen, welche senkrecht zueinander stehen, einem ersten und einem zweiten Winkelelement zugeordnet sind, welche in Längsrichtung und/oder Querrichtung der Aufnahme relativ zueinander bewegbar sind, und wobei das erste Winkelelement zumindest ein Führungselement aufweist, an welchem ein korrespondierendes Führungselement des zweiten Winkelelements bewegbar angeordnet ist.

Eine derartige Aufnahme ist aus GB203418 bekannt und als einstellbare Box in Kastenform ausgebildet mit vier Eckelementen, deren Stellung zueinander über zwei diagonal angeordneten Querglieder einstellbar ist.

Eine weitere Aufnahme ist aus der US 4696448 bekannt. Die Aufnahme für ein zumindest im Wesentlichen quaderförmiges Behältnis in einem Innenraum eines Kraftfahrzeugs umfasst wenigstens vier Wandelemente, welche jeweilige Anlageflächen für das quaderförmige Behältnis bilden. Die Aufnahme dient dazu, ein Papiertaschentuch-Behältnis aufzunehmen und in einem Fahrzeuginnenraum bereitzustellen.

Weitere ähnliche Aufnahmen zum Aufnehmen von Papiertaschentuch-Behältnissen im Innenraum eines Kraftfahrzeugs sind beispielsweise auch aus der US 5314103, US 3801056 oder auch aus der US 3288416 bekannt.

Es gibt eine Vielzahl an unterschiedlich ausgebildeten Papiertaschentuch-Behältnissen, welche teilweise entsprechend unterschiedliche Außenabmessungen aufweisen. Dadurch ist es mitunter schwierig, diese unterschiedlich großen Papiertaschentuch-Behältnisse mittels einer einzigen Aufnahme im Innenraum eines Kraftfahrzeugs verliersicher aufzunehmen.

Es ist daher die Aufgabe der vorliegenden Erfindung, eine gattungsgemäße Aufnahme der eingangs genannten Art bereitzustellen, mittels welcher auf einfache Weise eine Vielzahl von Behältnissen, insbesondere in Form von Papiertaschentuch-Behältnissen, mit unterschiedlichen Abmaßen aufgenommen werden können.

Diese Aufgabe wird durch eine Aufnahme mit den Merkmalen des Patentanspruchs 1 gelöst. Vorteilhafte Ausgestaltungen mit zweckmäßigen und nicht-trivialen Weiterbildungen der Erfindung sind in den abhängigen Patentansprüchen angegeben.

Um eine Vielzahl von unterschiedliche Abmessungen aufweisenden Behältnissen, insbesondere Papiertaschentuch-Behältnissen, im Innenraum eines Kraftfahrzeugs auf einfache Weise und verliersicher aufnehmen zu können, ist es bei einer erfindungsgemäßen Aufnahme vorgesehen, dass jeweils zwei der Anlageflächen, welche senkrecht zueinander stehen, einem ersten und einem zweiten Winkelelement zugeordnet sind, welche in Längsrichtung und/oder Querrichtung der Aufnahme relativ zueinander bewegbar sind. Dadurch, dass die beiden Winkelelemente relativbeweglich zueinander ausgebildet sind, kann die Länge und/oder Breite der Aufnahme bedarfsgerecht, also in Abhängigkeit von dem jeweils aufzunehmenden quaderförmigen Behältnis und dessen Abmessungen passgenau eingestellt werden. Dadurch können quaderförmige Behältnisse mit unterschiedlichsten Längen- und/oder Breitenabmessungen mittels ein und derselben Aufnahme verliersicher innerhalb eines Kraftfahrzeugs aufgenommen werden. Des Weiteren ist durch die erfindungsgemäße Relativbeweglichkeit der beiden Winkelelemente zueinander ein besonders leichtes Einsetzen und Wiederherausnehmen des aufzunehmenden Behältnisses ermöglicht, da die Aufnahme durch eine entsprechende Bewegung der beiden Winkelelemente zueinander bzw. voneinander weg entsprechend geschlossen bzw. geöffnet werden kann.

Erfindungsgemäß ist vorgesehen, dass das erste Winkelelement zumindest ein schienenförmig ausgebildetes Führungselement aufweist, an welchem ein korrespondierendes Führungselement des zweiten Winkelelements bewegbar angeordnet ist. Dadurch kann auf besonders einfache Weise eine Relativbewegung der beiden Winkelelemente zueinander auf einer vorgegebenen Bahn durch eine entsprechende Ausgestaltung der beiden Führungselemente erzielt werden. Die Größe der Aufnahme kann dadurch besonders einfach und exakt eingestellt werden, sodass unterschiedlich groß ausgebildete aufzunehmende Behältnisse besonders gut mittels der Aufnahme aufgenommen werden können.

Die Erfindung sieht weiter vor, dass die beiden Winkelelemente über ein Federelement miteinander gekoppelt sind, welches eine die beiden Winkelelemente aufeinander zu bewegende Rückstellkraft ausübt. Dadurch wird ein zwischen den beiden Winkelelementen aufgenommenes Behältnis besonders sicher innerhalb der Aufnahme gehalten, da durch die mittels des Federelements durchgängig aufbringbare Rückstellkraft das Behältnis zwischen den beiden Winkelelementen eingeklemmt werden kann.

Eine weitere bevorzugte Ausführungsform der Erfindung sieht vor, dass die beiden Winkelelemente über eine Dämpfereinheit miteinander gekoppelt sind, welche die Relativbewegung der beiden Winkelelemente zueinander dämpft. Dadurch kann eine besonders geschmeidige Bewegung der beiden Winkelelemente zueinander ermöglicht werden, wobei insbesondere auch unerwünschte Relativbewegungen der beiden Winkelelemente zueinander gedämpft und somit beispielsweise unerwünschte Klappergeräusche an der Aufnahme verhindert werden können.

Eine weitere vorteilhafte Ausführungsform der Erfindung sieht vor, dass die Dämpfereinheit ein an dem ersten Winkelelement drehbar gelagertes Zahnrad umfasst, welches bei einer Relativbewegung der beiden Winkelemente zueinander an einer an dem zweiten Winkelelement angeordneten Zahnstange abrollt. Vorzugsweise ist dabei an dem drehbar gelagerten Zahnrad ein Viskodämpfer vorgesehen, sodass bei einer Abrollbewegung des Zahnrads an der Zahnstange eine entsprechende Dämpfungswirkung erzielt werden kann.

In weiterer vorteilhafter Ausgestaltung der Erfindung ist es vorgesehen, dass das Federelement als Drehfeder ausgebildet ist, welche an einem an dem ersten Winkelelement drehbar gelagerten Verzahnungselement befestigt ist, welches bei einer Relativbewegung der beiden Winkelelemente zueinander an der an dem zweiten Winkelelement angeordneten Zahnstange abrollt. Dadurch wird auf besonders einfache Weise eine Rückstellkraft in Abhängigkeit von der Auslenkung der Drehfeder bereitgestellt.

Schließlich ist es bei einer weiteren vorteilhaften Ausführungsform der Erfindung vorgesehen, dass die Aufnahme an einer fahrzeugseitig befestigbaren Halterung lösbar anbringbar ist. Dadurch kann die Aufnahme auf besonders einfache Weise von der Halterung und somit aus dem Innenraum des Kraftfahrzeugs entfernt werden, beispielsweise um die Aufnahme zu reinigen oder beim Transport von Gegenständen innerhalb des Fahrzeuginnenraums, wobei die Aufnahme sich störend auswirken würde.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Aufnahme, welche in einem Innenraum eines Kraftfahrzeugs angeordnet ist, wobei mittels der Aufnahme ein quaderförmiges Papiertaschentuch-Behältnis aufgenommen ist;
- Fig. 2: eine Perspektivansicht auf ein erstes, im Wesentlichen die Unterseite der in Fig. 1 gezeigten Aufnahme ausbildendes Winkelelement;
- Fig. 3: eine Perspektivansicht auf eine Unterseite eines zweiten Winkelelements der Aufnahme, welches relativbeweglich gegenüber dem in Fig. 2 gezeigten ersten Winkelelement an diesem befestigbar ist;
- Fig. 4: eine teiltransparente Draufsicht auf die Aufnahme, wobei die beiden Winkelelemente aneinander in Anlage gebracht sind;
- Fig. 5: eine weitere teiltransparente Draufsicht auf die Aufnahme, wobei die beiden Winkelelemente im vorliegenden Fall voneinander wegbewegt sind;
- Fig. 6: eine Draufsicht auf eine alternative Ausführungsform des ersten, die Unterseite der Aufnahme ausbildenden Winkelelements;
- Fig. 7: eine Draufsicht auf eine alternative Ausführungsform des zweiten Winkelelements; und in
- Fig. 8: eine weitere Ausführungsform der Aufnahme, wobei die beiden in Fig. 6 und 7 gezeigten Ausführungsformen der Winkelelemente analog zu der in Fig. 5 gezeigten Positionierung voneinander wegbewegt sind.

In den Figuren werden gleiche oder funktionsgleiche Elemente mit den gleichen Bezugszeichen versehen.

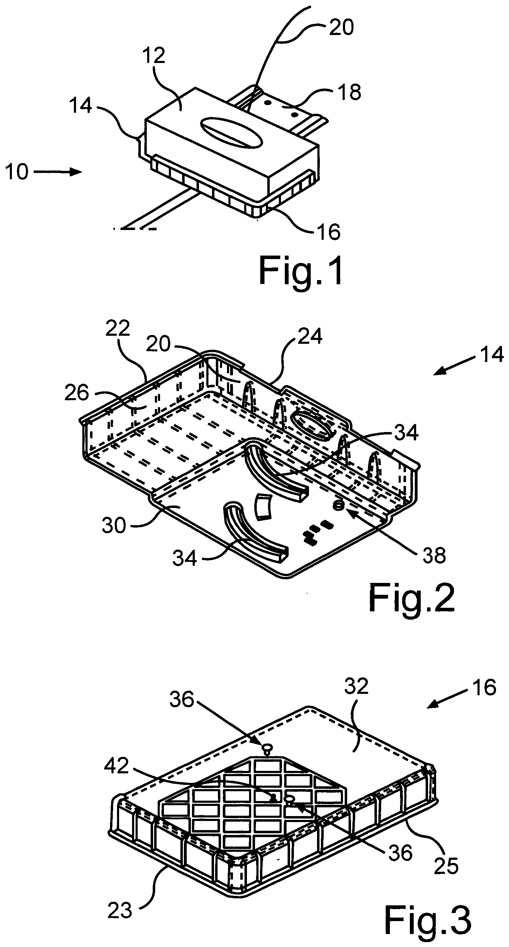

Eine Aufnahme 10, in welcher ein zumindest im Wesentlichen als quaderförmiges Behältnis ausgebildetes Papiertaschentuch-Behältnis 12 aufgenommen ist, ist in einer Perspektivansicht in Fig. 1 gezeigt. Die Aufnahme 10 umfasst dabei ein erstes Winkelelement 14 und ein zweites Winkelelement 16, welche in Längsrichtung und Querrichtung der Aufnahme 10 relativ zueinander bewegbar sind. Die Aufnahme 10 ist an einer fahrzeugseitig befestigbaren Halterung 18 lösbar unterhalb einem Polster 20 einer hier nicht näher bezeichneten Sitzfläche einer Rückbank eines Kraftwagens angebracht. Im vorliegenden Fall ist das erste Winkelelement 14 an der Halterung fixiert, sodass das zweite Winkelelement 16 gegenüber der Halterung 18 relativbeweglich an dem ersten Winkelelement 14 angebracht ist.

In Fig. 2 ist in einer Perspektivansicht das erste Winkelelement 14 dargestellt. Das erste Winkelelement 14 umfasst zwei Wandelemente 22, 24, welche jeweilige Anlageflächen 26, 28 für das Papiertaschentuch-Behältnis 12 bilden. Mit anderen Worten sind die beiden Anlageflächen 26, 28, welche senkrecht zueinander stehen, dem ersten Winkelelement 14 zugeordnet.

Eine Oberseite 30, welche im zusammengebauten Zustand der Aufnahme 10 einer Unterseite 32 des zweiten Winkelelements 16 zugeordnet ist, weist zwei gekrümmte Führungselemente 34 auf, an welchen jeweilige korrespondierende Führungselemente 36 des zweiten Winkelelements 16 bewegbar anordenbar sind. Ferner weist das erste Winkelelement 14 an seiner Oberseite 30 eine Öffnung 38 auf, in welcher eine hier nicht gezeigte Drehfeder 40 aufnehmbar ist, welche dazu dient, eine die beiden Winkelelemente 14, 16 aufeinander zu bewegende Rückstellkraft aufzubringen.

In Fig. 3 ist in einer Perspektivansicht das zweite Winkelelement 16 gezeigt, wobei im vorliegend gezeigten Fall die Unterseite 32 des zweiten Winkelelements 16 nach oben weisend angeordnet ist. Im zusammengebauten Zustand der Aufnahme 10 ist die Unterseite 32 der Oberseite 30 des ersten Winkelelements 14 zugewandt. Das zweite Winkelelement 16 umfasst ebenfalls zwei Wandelemente 23, 25, welche jeweilige hier nicht gekennzeichnete Anlageflächen 27, 29 für das Papiertaschentuch-Behältnis 12 bilden. Mit anderen Worten sind die beiden Anlageflächen 27, 29, welche senkrecht zueinander stehen, dem zweiten Winkelelement 16 zugeordnet.

An der Unterseite 32 sind als Schrauben ausgebildete Führungselemente 36 angebracht, welche in die schienenförmig ausgebildeten Führungselemente 34 eingebracht werden, sodass eine gemäß der Formgebung der schienenförmig ausgebildeten Führungselemente 34 vorgegebene Relativbewegung zwischen dem ersten Winkelelement 14 und dem zweiten Winkelelement 16 ermöglicht wird. Ferner ist an der Unterseite 32 des zweiten Winkelelements 16 ein Dorn 42 vorgesehen, welcher dazu dient, an der besagten Drehfeder 40 angeordnet zu werden.

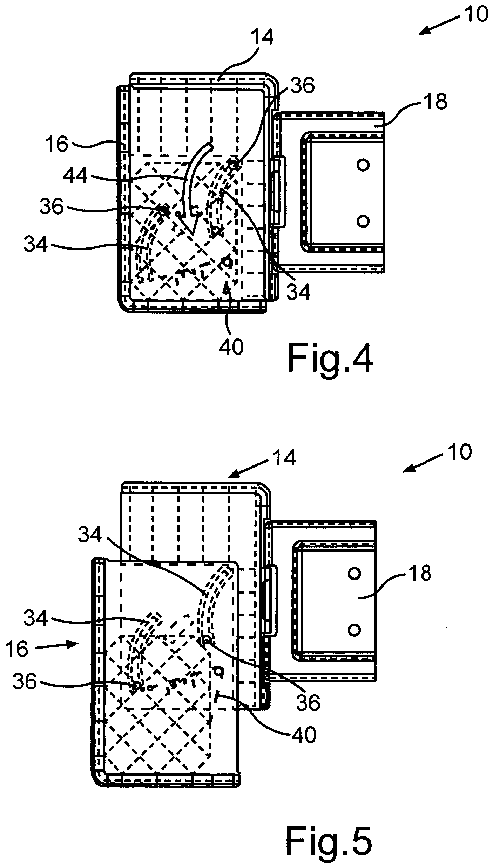

In Fig. 4 ist in einer teiltransparenten Draufsicht die Aufnahme 10 gezeigt. Vorliegend sind die beiden Winkelelemente 14, 16 miteinander in Anlage gebracht bzw. in einer Art Geschlossenstellung gezeigt. Die Drehfeder 40 ist dabei derart an den beiden Winkelelementen 14, 16 angebracht, dass sie eine entsprechende Rückstellkraft ausübt, wodurch die beiden Winkelelemente 14, 16 in die hier gezeigte Position automatisch aufeinander zu bewegt werden. Dadurch kann das Papiertaschentuch-Behältnis 12, welches vorliegend nicht dargestellt ist, auf einfache Weise zwischen den beiden Winkelelementen 14, 16 verliersicher eingeklemmt werden. Mittels des Pfeils 44 ist eine Öffnungsbewegungsrichtung der Aufnahme 10 symbolisiert.

In Fig. 5 ist die Aufnahme 10 in einer weiteren teiltransparenten Draufsicht gezeigt. Vorliegend sind die beiden Winkelelemente 14, 16 voneinander wegbewegt, wobei dies die maximale Öffnungsstellung der Aufnahme 10 darstellt, was daran zu erkennen ist, dass die an dem zweiten Winkelelement 16 angebrachten Führungselemente 36 in einem nicht näher bezeichneten Endbereich der schienenförmigen Führungselemente 34, welche an dem ersten Winkelelement 14 vorgesehen sind, angeordnet sind.

Beispielsweise können an den Führungselementen 34 entsprechende, hier nicht gezeigte Anschläge vorgesehen sein, sodass eine über die hier gezeigte Öffnung hinausgehende Bewegung des zweiten Winkelelements 16 von dem ersten Winkelelement 14 weg unterbunden wird. Um die Aufnahme 10 in der hier gezeigten Stellung halten zu können, muss eine entsprechende Kraft aufgebracht werden, um die von der Drehfeder 40 aufgebrachte Rückstellkraft zu überwinden. Eine Relativbewegung der beiden Winkelelemente 14, 16 ist stufenlos zwischen der in Fig. 4 gezeigten Position und der in Fig. 5 gezeigten Position möglich, sodass unterschiedlich groß ausgebildete Papiertaschentuch-Behältnisse 12 oder auch andere, im Wesentlichen quaderförmig ausgebildete Behältnisse mittels der Aufnahme 10 aufgenommen werden können.

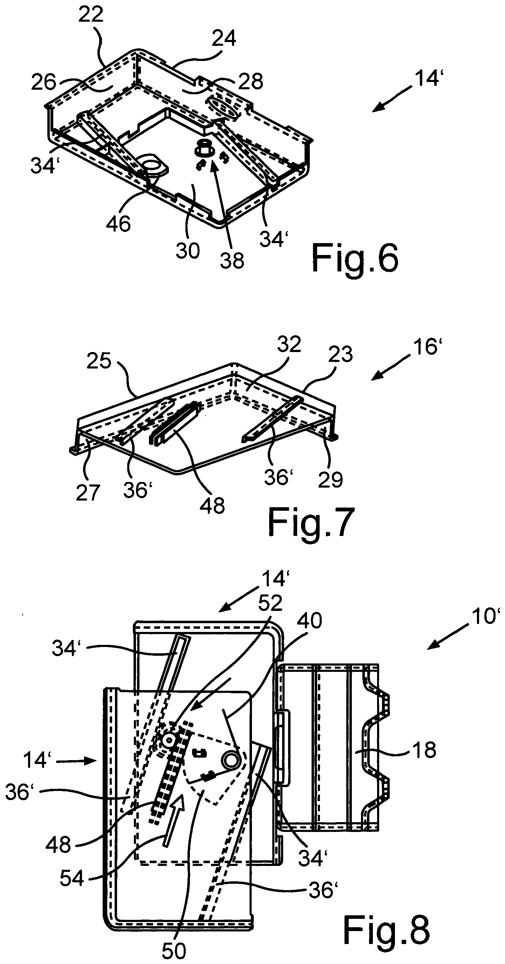

In Fig. 6 ist in einer Perspektivansicht eine alternative Ausführungsform 14' des ersten Winkelelements gezeigt. Im Unterschied zu der ersten Ausführungsform des Winkelelements 14 sind die an der Oberseite 30 vorgesehenen Führungselemente 34' nicht kurvenförmig, sondern geradlinig ausgebildet.

In Fig. 7 ist in einer Perspektivansicht eine alternative Ausführungsform 16' des zweiten Winkelelements gezeigt. Korrespondierend zu den geradlinig ausgebildeten Führungselementen 34' sind entsprechend ebenfalls geradlinig ausgebildete Führungselemente 36' an der Oberseite 32 vorgesehen, sodass die beiden Winkelelemente 14', 16' unter Vermittlung der Führungselemente 34', 36' relativbeweglich zueinander sind.

An der Oberseite 30 des Winkelelements 14', wie in Fig. 6 gezeigt, ist zusätzlich eine Dämpferaufnahme 46 vorgesehen. Die Dämpferaufnahme 46 ist ein Teil einer nicht näher bezeichneten Dämpfereinheit, über welche die beiden Winkelelemente 14', 16' miteinander gekoppelt sind, welche die Relativbewegung der beiden Winkelelemente 14', 16' zueinander dämpft. An dem zweiten Winkelelement 16' ist eine Zahnstange 48 vorgesehen, welche ebenfalls zu der Dämpfereinheit gehört.

In Fig. 8 ist eine alternative Ausführungsform der Aufnahme 10' gezeigt, wobei die beiden Winkelelemente 14', 16' analog zu der in Fig. 5 gezeigten Positionierung abgebildet sind. Wie zu erkennen, ist das Federelement 40 ebenfalls als Drehfeder ausgebildet, welche vorliegend an einem an dem ersten Winkelelement 14' drehbar gelagerten Verzahnungselement 50 befestigt ist, welches bei einer Relativbewegung der Winkelelemente 14', 16' zueinander an der an dem zweiten Winkelelement 16' angeordneten Zahnstange 48 abrollt.

Des Weiteren umfasst die Dämpfereinheit ein an dem ersten Winkelelement 14' drehbar gelagertes Zahnrad 52, welches bei einer Relativbewegung der beiden Winkelelemente 14', 16' zueinander an einer an dem zweiten Winkelelement 16' angeordneten Zahnstange 48 abrollt. Die Dämpfereinheit kann dabei beispielsweise als eine Art Viskodämpfer ausgebildet sein, sodass drehgeschwindigkeitsabhängig von dem Zahnrad 52 eine entsprechende Dämpfung der Relativbewegung der beiden Winkelelemente 14', 16' bereitgestellt wird.

Mittels des Pfeils 54 ist eine Schließbewegung der Aufnahme 10' symbolisiert, in welche das zweite Winkelelement 16' aufgrund der durch die Drehfeder 40 aufgebrachten Rückstellkraft auf das erste Winkelelement 14' zu bewegt wird, welches seinerseits wiederum an der Halterung 18 und somit im Fahrzeuginnenraum befestigt ist.

Mittels der erläuterten Aufnahmen 10, 10' wird eine einfache Möglichkeit bereitgestellt, Papiertaschentuch-Behältnisse 12 unterschiedlichster Abmessungen auf einfache Weise aufzunehmen und innerhalb,des Fahrzeuginnenraums einfach erreichbar bereitzustellen. Beispielsweise kann die Aufnahme 10, 10' im Bereich eines mittleren Sitzes einer Rückbank des Fahrzeugs angebracht sein, wobei diese für den Fall, dass der mittlere Sitz ebenfalls besetzt werden soll, auf einfache Weise von der Halterung 18 entfernt werden kann.

## Patentansprüche

1. Aufnahme (10, 10') für ein zumindest im Wesentlichen quaderförmiges Behältnis (12) in einem Innenraum eines Kraftfahrzeugs, welches wenigstens vier Wandelemente (22, 23, 24, 25) umfasst, welche jeweilige Anlageflächen (26, 27, 28, 29) für das quaderförmige Behältnis (12) bilden,
wobei jeweils zwei der Anlageflächen (26, 27, 28, 29), welche senkrecht zueinander stehen, einem ersten und einem zweiten Winkelelement (14, 14', 16, 16') zugeordnet sind, welche in Längsrichtung und/oder Querrichtung der Aufnahme (10, 10') relativ zueinander bewegbar sind, und
wobei das erste Winkelelement (14,14') zumindest ein Führungselement (34, 34') aufweist, an welchem ein korrespondierendes Führungselement (36, 36') des zweiten Winkelelements (16, 16') bewegbar angeordnet ist,
**dadurch gekennzeichnet, dass**
die beiden Winkelelemente (14, 14', 16, 16') über ein Federelement (40) miteinander gekoppelt sind, welches eine die beiden Winkelelemente (14, 14', 16, 16') aufeinander zu bewegende Rückstellkraft ausübt, und
dass das zumindest eine Führungselement (34, 34') schienenförmig ausgebildet ist.

2. Aufnahme (10, 10') nach Anspruch 1,
**dadurch gekennzeichnet, dass**
die beiden Winkelelemente (14, 14', 16, 16') über eine Dämpfereinheit miteinander gekoppelt sind, welche die Relativbewegung der beiden Winkelelemente (14, 14', 16, 16') zueinander dämpft.

3. Aufnahme (10, 10') nach Anspruch 2,
**dadurch gekennzeichnet, dass**
die Dämpfereinheit ein an dem ersten Winkelelement (14') drehbar gelagertes Zahnrad (52) umfasst, welches bei einer Relativbewegung der beiden Winkelelemente (14', 16') zueinander an einer an dem zweiten Winkelelement (16') angeordneten Zahnstange (48) abrollt.

4. Aufnahme (10, 10') nach einem der vorhergehenden Ansprüche,
**dadurch gekennzeichnet, dass**
das Federelement (40) als Drehfeder ausgebildet ist, welche an einem an dem ersten Winkelelement (14') drehbar gelagerten Verzahnungselement (50) befestigt ist, welches bei einer Relativbewegung der beiden Winkelelemente (14', 16') zueinander an der an dem zweiten Winkelelement (16') angeordneten Zahnstange (48) abrollt.

5. Aufnahme (10, 10') nach einem der vorhergehenden Ansprüche,
**dadurch gekennzeichnet, dass**
die Aufnahme (10, 10') an einer fahrzeugseitig befestigbaren Halterung (18) lösbar anbringbar ist.

## Claims

1. Receptacle (10, 10') for an at least substantially cuboid container (2) in an interior of a motor vehicle, the receptacle (10, 10;) comprising at least four wall elements (22, 23, 24, 25), each forming an contact surface (26, 27, 28, 29) for the cuboid container (2),
wherein two each of the contact surfaces (26, 27, 28, 29), which are perpendicular to one another, are assigned to a first and a second angle element (14, 14', 16, 16'), which are movable relative to one another in the longitudinal and/or transverse direction of the receptacle (10, 10;), and
wherein the first angle element (14, 14') has at least one guide element (34, 34'), on which a corresponding guide element (36, 36') of the second angle element (16, 16') is movably located,
**characterised in that**
the two angle elements (14, 14', 16, 16') are coupled to one another by a spring element (40) applying a restoring force for moving the two angle elements (14, 14', 16, 16') towards one another, and
**in that** the at least one guide element (34, 34') is designed in a rail shape.

2. Receptacle (10, 10') according to claim 1,
**characterised in that**
the two angle elements (14, 14', 16, 16') are coupled to one another via a damper unit which damps the movement of the two angle elements (14, 14', 16, 16') relative to one another.

3. Receptacle (10, 10') according to claim 2,
**characterised in that**
the damper unit comprises a gear (52), which is rotatably mounted on the first angle element (14') and which rolls on a rack (48) assigned to the second angle element (16') during a movement of the two angle elements (14', 16') relative to one another.

4. Receptacle (10, 10') according to any of the preceding claims,
**characterised in that**
the spring element (40) is designed as a torsion spring secured to a toothing element (50) rotatably mounted on the first angle element (14') and rolling on the rack (48) assigned to the second angle element (16') during a movement of the two angle elements (14', 16') relative to one another.

5. Receptacle (10, 10') according to any of the preceding claims,
**characterised in that**
the receptacle (10, 10') can be releasably attached to a holder (18) which can be secured to the vehicle.

## Revendications

1. Logement (10, 10') pour au moins un récipient (12) essentiellement rectangle dans un espace intérieur d'un véhicule automobile, qui au moins comprend quatre éléments de paroi (22, 23, 24, 25) qui forment respectivement des surfaces d'installation (26, 27, 28, 29) pour le récipient (12) rectangle, respectivement deux des surfaces d'installation (26, 27, 28, 29) qui sont perpendiculaires l'une par rapport à l'autre, étant associées à un premier et à un second élément d'angle (14, 14', 16, 16') qui peuvent se déplacer l'une par rapport à l'autre dans la direction longitudinale et/ou dans la direction transversale du logement (10, 10') et le premier élément d'angle (14, 14') présentant au moins un élément de guidage (34, 34') sur lequel est disposé mobile un élément de guidage (36, 36') correspondant du second élément d'angle (16, 16'), **caractérisé en ce que** les deux éléments d'angle (14, 14', 16, 16') sont reliés ensemble par un élément de ressort (40) qui exerce sur l'un des deux éléments d'angle (14, 14', 16, 16') à déplacer l'un par rapport à l'autre une force de rappel et **en ce que** l'au moins un élément de guidage (34, 34') est formé en tant que rail.

2. Logement (10, 10') selon la revendication 1, **caractérisé en ce que** les deux éléments d'angle (14, 14', 16, 16') sont reliés l'un à l'autre par une unité d'amortissement qui amortit le mouvement relatif des deux éléments d'angle (14, 14', 16, 16') l'un par rapport à l'autre.

3. Logement (10, 10') selon la revendication 2, **caractérisé en ce que** l'unité d'amortissement comprend une roue dentée (52) montée en rotation sur le premier élément d'angle (14') qui se déroule lors d'un mouvement relatif des deux éléments d'angle (14', 16') l'un par rapport à l'autre sur une barre crantée (48) disposée sur le second élément d'angle (16').

4. Logement (10, 10') selon l'une quelconque des revendications précédentes, **caractérisé en ce que** l'élément de ressort (40) est formé en tant que ressort rotatif, qui est fixé sur un élément denté (50) monté en rotation sur le premier élément d'angle (14') qui lors d'un mouvement relatif des deux éléments d'angle (14', 16') l'un par rapport à l'autre se déroule sur la barre crantée (48) disposée sur le second élément d'angle (16').

5. Logement (10, 10') selon l'une quelconque des revendications précédentes, **caractérisé en ce que** le logement (10, 10') peut être appliqué amovible sur une fixation (18) pouvant être fixée côté véhicule automobile.
